# EUROPEAN PATENT APPLICATION

(11) **EP 4 418 478 A1**
(43) Date of publication of application: **21.08.2024**
(21) Application number: 22880612.1
(22) Date of filing: 27.07.2022
(51) Int. Cl.: H02G 3/22, A47K 4/00, A47K 17/00, B64C 1/00, B64D 11/02, F16L 57/00

(54) **CABLE PROTECTION MEMBER AND AIRCRAFT LAVATORY UNIT EQUIPPED WITH SAID CABLE PROTECTION MEMBER**

(30) Priority: 12.10.2021 JP 2021167593
(71) Applicant: The Yokohama Rubber Co., Ltd., Hiratsuka-shi, Kanagawa 254-8601 (JP)
(72) Inventor: NAKAO, Kazushi, Hiratsuka-shi, Kanagawa 254-8601 (JP)
(74) Representative: Dilg, Haeusler, Schindelmann Patentanwaltsgesellschaft mbH
(86) International application number: PCT/JP2022/028874
(87) International publication number: WO 2023/062912

(57) **Abstract**

Provided are a cable protection member that is advantageous in improving efficiency of cable protection work and an aircraft lavatory unit equipped with a cable protection member that is advantageous in improving efficiency of protection work of a cable to be used in the aircraft lavatory unit and in protecting the cable. A cable protection member (56) includes a cable insertion hole (58) through which a cable (38) is inserted and a pair of protection member sections (56A, 56B) divided in a diameter direction of the cable insertion hole (58). The pair of protection member sections (56A, 56B) include diameter-direction coupling portions (63) to be immovably coupled to each other in the diameter direction of the cable insertion hole (58) with the pair of protection member sections (56A, 56B) coupled to each other. Coupling the pair of protection member sections (56A, 56B) with the cable (38) sandwiched therebetween with the diameter-direction coupling portions (63) allows the cable (38) to be easily and reliably covered and protected by the cable protection member (56) and is advantageous in improving efficiency of protection work of the cable (38).

## Description

### Technical Field

The present invention relates to a cable protection member and an aircraft lavatory unit equipped with the cable protection member.

### Background Art

In wiring a cable that connects electrical devices installed on-site, a tube-shaped cable protection member that covers and protects the cable not to damage the cable by touching a surrounding structure around which the cable is routed has been proposed (see Patent Document 1).

Such a cable protection member covers the cable, with the cable inserted into the inside of the cable protection member.

### Citation List

### Patent Literature

Patent Document 1: JP 2016-86600 A

### Summary of Invention

### Technical Problem

In protecting a cable having one end connected to an electrical device and the other end attached with a connector by using the cable protection member described above, the outer diameter of the connector is larger than the inner diameter of the cable protection member in many cases, thus failing to insert the cable into the cable protection member due to obstruction of the connector.

Thus, in such a case, it is necessary to once detach the connector from the cable and insert the cable into the cable protection member and then reattach the connector to a portion of the cable exposed from an end portion of the cable protection member. That is, detachment and attachment work of the connector is needed, which is disadvantageous in efficient cable protection work on-site.

In a lavatory unit for aircraft, for example, a faucet installed on the upper surface of a counter table of a lavatory and equipped with a sensor detecting part of a human body and a control unit which is installed below the counter table and controls water discharge and water stop of the faucet in response to a detection signal of the sensor may be connected by a cable having one end of the cable connected to the faucet side and the other end of the cable attached to a connector.

In protecting the cable with the above-described cable protection member, the outer diameter of the connector is larger than the inner diameter of the cable protection member as described above. This needs detachment and attachment work of the connector and is disadvantageous in efficient cable protection work on-site.

Meanwhile, in a lavatory unit for aircraft, a faucet is attached via a through-hole formed in a counter table, and a cable is connected to a control unit located below the counter table through the through-hole.

A section around the through-hole at the lower surface of the counter table is an edge, and the cable is disposed passing near the edge.

Thus, severe vibration of a fuselage when an aircraft enters an air pocket during flight may cause the cable to contact the edge and damage a covered portion of the cable. When the covered portion is damaged, maintenance work at the time of maintenance, such as replacement of the cable, becomes troublesome, and thus any improvement has been awaited.

The present invention has been made in view of the above circumstances, and an object of the present invention is to provide a cable protection member that is advantageous in improving efficiency of cable protection work and an aircraft lavatory unit including the cable protection member that is advantageous in improving efficiency of protection work of a cable to be used in the aircraft lavatory unit and in protecting the cable.

### Solution to Problem

To achieve the above object, an embodiment of the present invention is a cable protection member for protecting a cable. The cable protection member includes a cable insertion hole through which the cable is inserted and a pair of protection member sections divisible in a diameter direction of the cable insertion hole. The pair of protection member sections include diameter-direction coupling portions to be immovably coupled in a direction away from each other in the diameter direction of the cable insertion hole, and the cable insertion hole is formed inside the pair of protection member sections that are being coupled via the diameter-direction coupling portions.

### Advantageous Effects of Invention

According to the embodiment of the present invention, without detaching the connector from the cable, the cable can be inserted through the cable insertion hole and covered with the cable protection member by coupling the pair of protection member sections with the cable sandwiched therebetween with the diameter-direction coupling portions, allowing the cable to be easily and reliably covered and protected by the cable protection member. This is advantageous in improving efficiency of cable protection work and in simplifying maintenance work.

### Brief Description of Drawings

FIG. 1 is a perspective view of an aircraft lavatory unit to which a cable protection member according to an embodiment is applied.
FIG. 2 is an enlarged perspective view of a portion of a counter table to which an automatic faucet is attached.
FIG. 3 is a bottom view of FIG. 2 as viewed from below the counter table, illustrating a state in which the cable protection member according to the embodiment is installed at a cable.
FIG. 4 is a perspective view of the automatic faucet as viewed obliquely from above.
FIG. 5 is a perspective view of the automatic faucet as viewed obliquely from below, illustrating a state in which the cable protection member according to the embodiment is provided at the cable of the automatic faucet.
FIGS. 6 (A), (B), and (C) are explanatory diagrams illustrating a state in which the cable protection member according to the embodiment is installed at a notch portion of the counter table.
FIG. 7 is a cross-sectional view illustrating a state in which the cable protection member according to the embodiment is installed at the notch portion of the counter table.
FIGS. 8 (A), (B), and (C) are explanatory diagrams illustrating a procedure for assembling the cable protection member according to the embodiment.
FIG. 9 illustrates assembly diagrams of the cable protection member according to the embodiment, wherein (A) is a perspective view, (B) is a view in the direction of an arrow B in (A), and (C) is a view in the direction of an arrow C in (A).
FIG. 10 illustrates assembly diagrams of the cable protection member according to the embodiment, wherein (A) is a front view, (B) is a view in the direction of an arrow B in (A), and (C) is a view in the direction of an arrow C in (A).

In FIG. 11, (A) is a perspective view of a first protection member section, (B) is a view in the direction of an arrow B in (A), and (C) is a view in the direction of an arrow C in (A).

In FIG. 12, (A) is a front view of the first protection member section, (B) is a view in the direction of an arrow B in (A), and (C) is a view in the direction of an arrow C in (A).

In FIG. 13, (A) is a perspective view of a second protection member section, (B) is a view in the direction of an arrow B in (A), and (C) is a view in the direction of an arrow C in (A).

In FIG. 14, (A) is a front view of the second protection member section, (B) is a view in the direction of an arrow B in (A), and (C) is a view in the direction of an arrow C in (A).

FIG. 15 is an explanatory diagram illustrating a state in which the cable protection member is supported by bundling bands fastened to cables.

In FIG. 16, (A) is a perspective view of a second protection member section in Modified Example 1, and (B) is a view in the direction of an arrow B in (A).

In FIG. 17, (A) is a perspective view of a first protection member section according to Modified Example 1, and (B) is a view in the direction of an arrow B in (A).

In FIG. 18, (A) is a perspective view of a second protection member section according to Modified Example 2, and (B) is a view in the direction of an arrow B in (A).

In FIG. 19, (A) is a perspective view of a first protection member section according to Modified Example 2, and (B) is a view in the direction of an arrow B in (A).

### Description of Embodiments

### First Embodiment

Next, the present embodiment will be described with reference to the drawings.

In the present embodiment, a case in which a cable protection member according to an embodiment of the present invention is applied to an automatic faucet constituting a counter table device of an aircraft lavatory unit will be described.

First, an aircraft lavatory unit will be described.

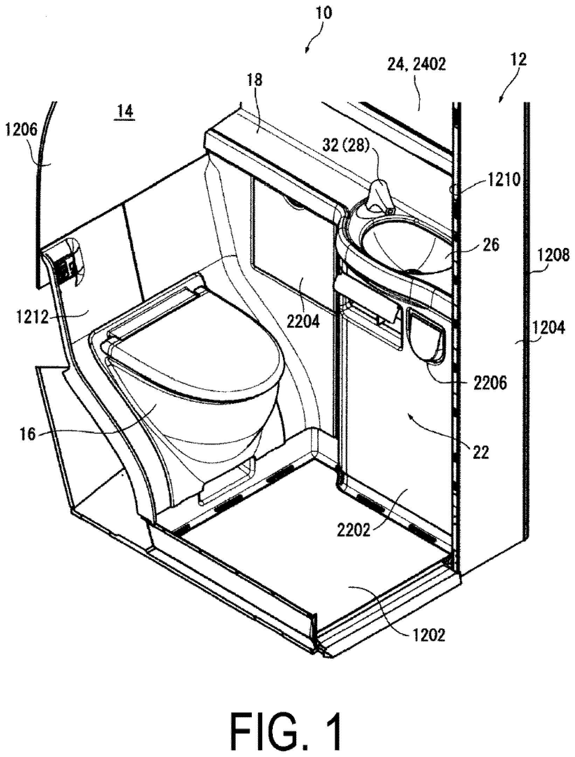

As illustrated in FIG. 1, an aircraft lavatory unit 10 includes a structural frame 12 including a bottom wall 1202, a plurality of wall plates rising from the bottom wall 1202, and a ceiling (not illustrated) that form a lavatory 14 therein.

In the present embodiment, one of the plurality of wall plates is a front wall 1204, one is a rear wall 1206 facing the front wall 1204, and the remaining two walls are a pair of side walls 1208 that connect two sides of the rear wall 1206 and corresponding two sides of the front wall 1204, an entrance 1210 opened and closed by a door is provided at the front wall 1204, an inner wall 1212 is provided in front of the rear wall 1206, and a toilet 16 is provided on the bottom wall 1202 via the inner wall 1212.

In FIG. 1, one of the pair of side walls 1208, and the door that opens and closes the entrance 1210 are omitted.

A counter table 18 is provided in the middle of the side wall 1208 in the height direction. Below the counter table 18 is a lower storage portion 22 in which, for example, a trash can device having a fire extinguishing function (not illustrated) and equipment for the lavatory 14 are stored. The lower storage portion 22 is openable and closable by a plurality of doors 2202 and 2204. In FIG. 1, the reference sign 2206 indicates a trash feeding port.

Above the counter table 18 is an upper storage portion 24 in which equipment for the lavatory 14, such as tissues, is stored. The upper storage portion 24 is opened and closed by a mirrored door 2402.

A bowl portion 26 is provided at a section of the counter table 18 close to the front wall 1204, and an automatic faucet 28 that can discharge water to the bowl portion 26 is provided at a section of the counter table 18 around the bowl portion 26.

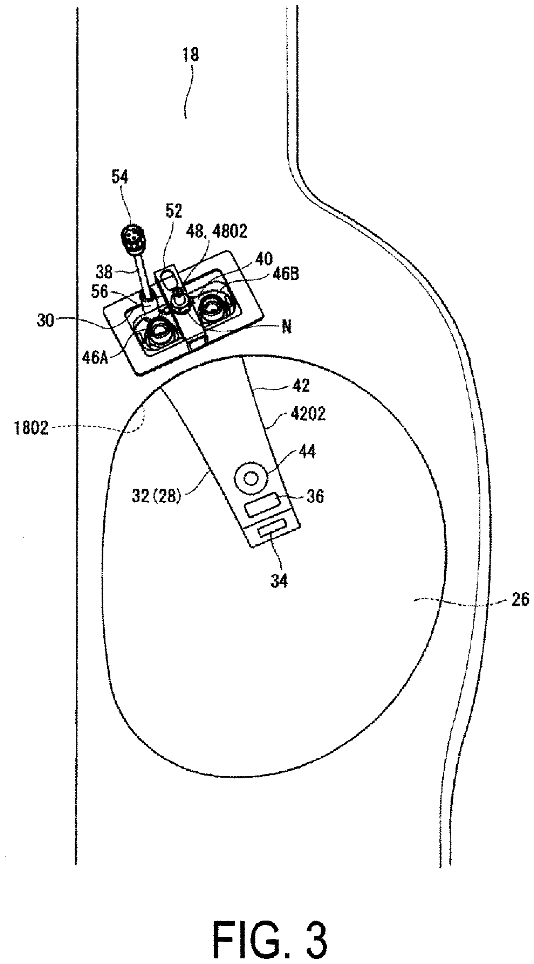

As illustrated in FIG. 3, the automatic faucet 28 is disposed via a through-hole 30 provided in the counter table 18.

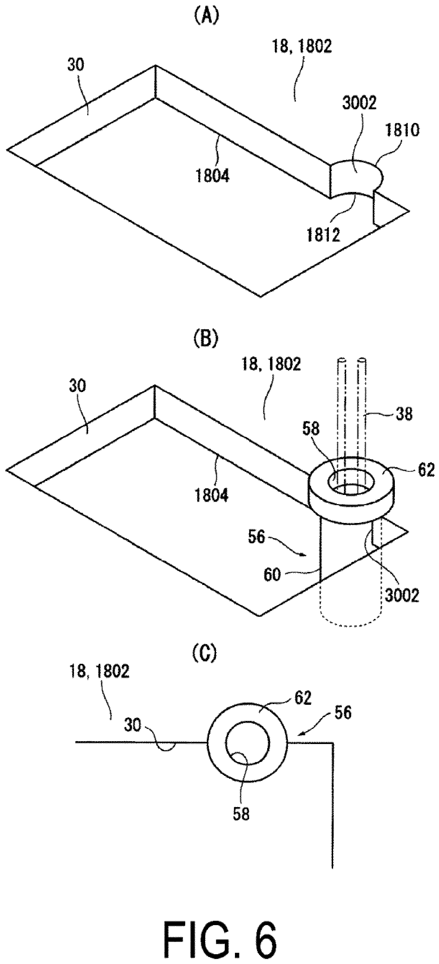

As illustrated in FIG. 6(A), edges 1810 and 1812 remain around the through-hole 30 and a notch portion 3002 at an upper surface 1802 and a lower surface 1804 of the counter table 18.

The automatic faucet 28 detects part of a human body (fingers) to discharge and stop water.

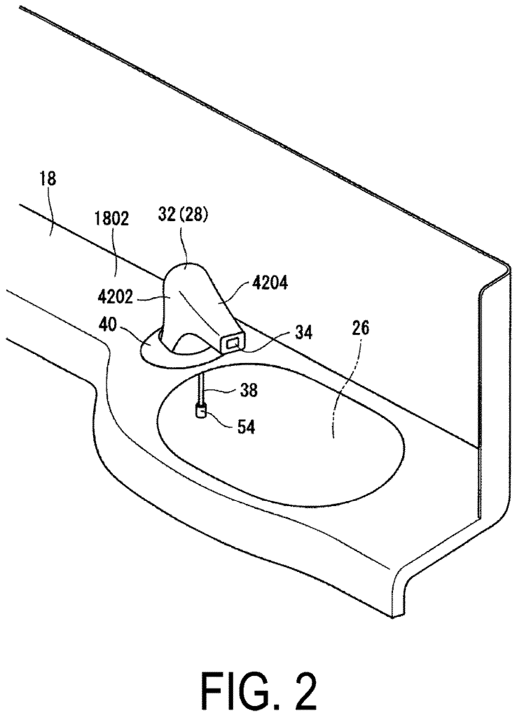

As illustrated in FIGS. 2 to 5, the automatic faucet 28 includes a faucet 32, a contact sensor 34, a non-contact sensor 36, a control unit (not illustrated), and a cable 38.

The bowl portion 26 is not illustrated in FIGS. 2 and 3.

The faucet 32 discharges water supplied from a water supply source (not illustrated) via a water supply path (not illustrated) and hot water supplied from a water heater (not illustrated) provided at the water supply path via a hot water path (not illustrated).

The faucet 32 is made of various known materials such as metal and synthetic resin.

As illustrated in FIGS. 2 to 5, the faucet 32 includes a base plate portion 40 attached to the upper surface 1802 of the counter table 18, and a faucet body 42 standing from the base plate portion 40 and including a water discharge port 44 at a tip portion thereof.

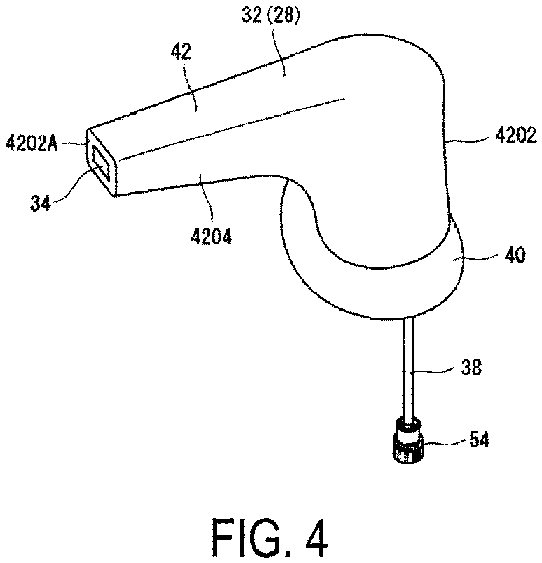

The shape of the faucet body 42 is appropriately modified according to a section at which the faucet 32 is installed. In the present embodiment, as illustrated in FIGS. 2 and 4, the faucet body 42 includes a vertical portion 4202 standing upward from the base plate portion 40 and a horizontal portion 4204 extending from the upper part of the vertical portion 4202 toward the bowl portion 26.

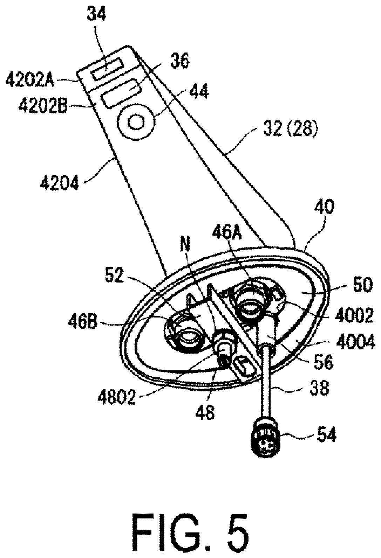

As illustrated in FIGS. 4 and 5, the contact sensor 34 is provided at a front surface 4202A of the horizontal portion 4204 of the faucet body 42 around the water discharge port 44 and detects part of a human body when the part of the human body comes into contact with the contact sensor 34.

Such a contact sensor 34 can use a known sensor such as a touch switch that detects finger contact or a capacitive touch sensor that detects part of a human body with a change in electrostatic capacitance due to finger contact. In the present embodiment, a touch switch is used as the contact sensor 34.

As illustrated in FIG. 5, the non-contact sensor 36 is provided at a lower surface 4204B of the horizontal portion 4204 of the faucet body 42 around the water discharge port 44 and detects part of a human body in a non-contact manner.

The lower surface 4204B of the horizontal portion 4204 faces obliquely downward facing the upper side of the bowl portion 26.

Such a non-contact sensor 36 can use a known sensor such as an infrared sensor that radiates detection light composed of infrared rays to detect part of the human body in response to reflected light or a capacitive non-contact sensor 36 that detects part of a human body in a non-contact manner with a change in electrostatic capacitance due to the approach of the part of the human body. The present embodiment uses an infrared sensor as the non-contact sensor 36.

As illustrated in FIGS. 4 and 5, the base plate portion 40 has an elliptical shape in a plan view.

As illustrated in FIG. 5, an opening 4002 communicating with the interior of the faucet body 42 is provided at the center of a lower surface 4004 of the base plate portion 40, and a pair of connecting pipe portions 46A and 46B connected to the water discharge port 44 is provided on both sides of the opening 4002.

One connecting pipe portion 46A is a connecting pipe portion for water supply to which the water supply path is connected, and the other connecting pipe portion 46B is a connecting pipe portion for hot water to which the hot water path is connected.

A rod 48 attached to the faucet body 42 is suspended from the center of the opening 4002, and a male thread 4802 is formed at the lower portion of the rod 48.

At the lower surface 4004 of the base plate portion 40 located around the opening 4002, a packing 50 for preventing water leakage having an elliptical annular plate shape is disposed surrounding the pair of connecting pipe portions 46A and 46B and the rod 48.

As illustrated in FIG. 3, the base plate portion 40 of the faucet 32 is attached to the upper surface 1802 of the counter table 18 via the rod 48, a clamp fitting 52 having an elongated shape and a nut N engaged with the male thread 4802.

The base plate portion 40 of the faucet 32 is attached to the counter table 18 as follows.

The counter table 18 is provided with a through-hole 30 having an elongated shape which is slightly smaller than the contour of the base plate portion 40.

The lower surface 4004 of the base plate portion 40 is placed on the upper surface 1802 of the counter table 18 around the through-hole 30 with the packing 50 mounted at the lower surface 4004 of the base plate portion 40, and the base plate portion 40 is positioned to make the major axis direction of the base plate portion 40 parallel to the long side direction of the through-hole 30 and coincide the center of the base plate portion 40 with the center of the through-hole 30.

Next, the tip of the rod 48 projecting downward from the through-hole 30 is inserted into the clamp fitting 52, both ends of the clamp fitting 52 in the longitudinal direction are brought into contact with the edge portions of a pair of long sides of the through-hole 30, the nut N is screwed onto the male thread 4802 of the rod 48 to tighten the clamp fitting 52 by the nut N, and thus the counter table 18 is sandwiched between the base plate portion 40 and the packing 50, and the clamp fitting 52. This allows the faucet 32 to be attached to the upper surface 1802 of the counter table 18.

The control unit is provided at a section below the counter table 18 in the vicinity of the automatic faucet 28, and is connected to the contact sensor 34 and the non-contact sensor 36 via the cable 38.

The control unit switches between water discharge and water stop from the water discharge port 44 based on detection signals output from the contact sensor 34 and the non-contact sensor 36.

In the present embodiment, a solenoid valve (not illustrated) is provided at each of the water supply path that supplies water to the faucet 32 and the hot water path that supplies hot water to the faucet 32. Upon receiving a detection signal indicating that the contact sensor 34 or the non-contact sensor 36 has detected part of a human body, the control unit opens the solenoid valve for a predetermined valve opening time to discharge water or hot water from the water discharge port 44, and closes the solenoid valve upon elapse of the valve opening time.

In this way, a predetermined amount of water or hot water is discharged from the faucet 32 by opening the valve for a certain valve opening time.

A selector switch (not illustrated) is connected to the control unit, and the control unit selects whether to supply water or hot water to the faucet 32 based on the operation of the selector switch to operate the electromagnetic valve.

The cable 38 connects the contact sensor 34 and the non-contact sensor 36 to the control unit. As illustrated in FIGS. 2 to 5, the cable 38 is drawn from the inside of the faucet body 42 to below the counter table 18 through the opening 4002 and the through-hole 30.

The cable 38 includes a plurality of electric wires connected to the contact sensor 34 and a plurality of electric wires connected to the non-contact sensor 36. The other ends of the plurality of electric wires are coupled to a single connector 54 and are detachably connected to the control unit via the connector 54.

In the present embodiment, the connector 54 connected to the cable 38 has an outer diameter larger than the inner diameter of a cable insertion hole 58 to be described below.

Instead of providing the single connector 54, a connector having an outer diameter larger than the inner diameter of the cable insertion hole 58 may be connected to each electric wire.

Each electric wire includes a core wire that is made of a conductor and transmits a signal, and a covering (core wire covering) that is made of an insulator and covers the core wire.

FIGS. 2 to 5 illustrate a case in which the cable 38 is a single cable 38 including a plurality of electric wires and a sheath (exterior covering) that is made of an insulator and collectively covers the plurality of electric wires.

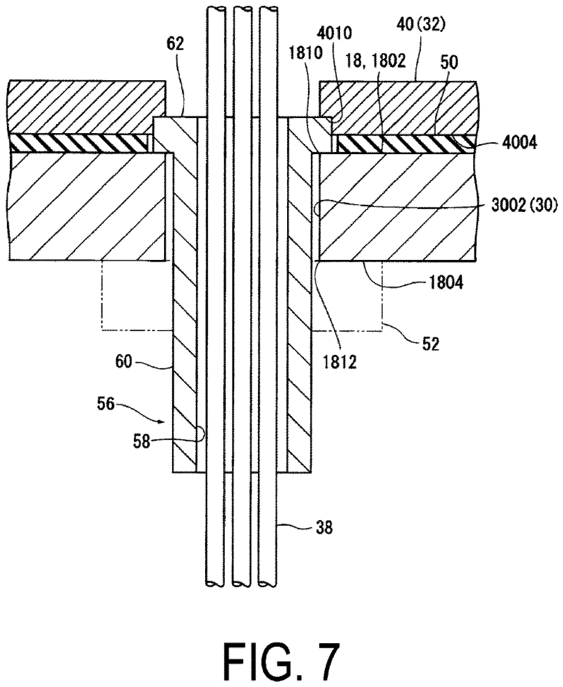

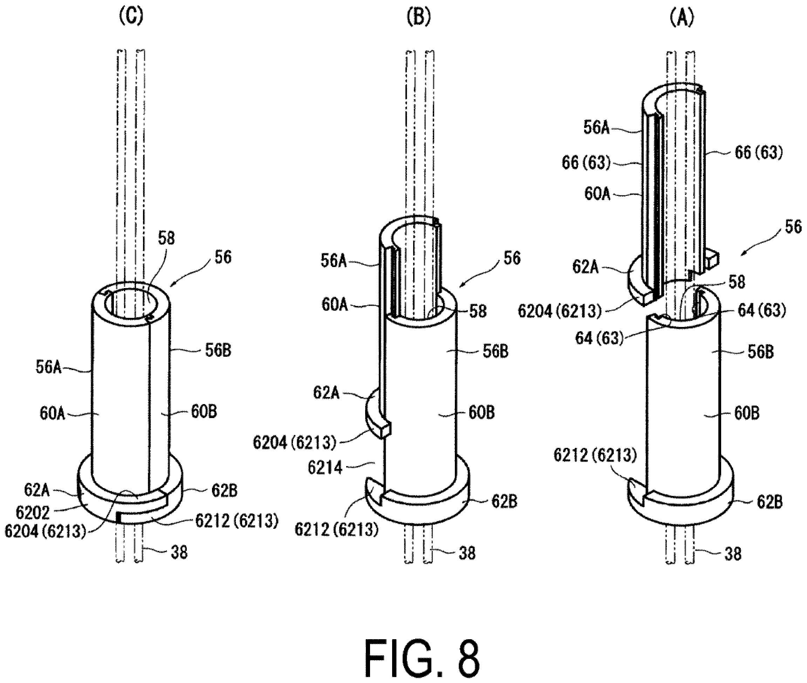

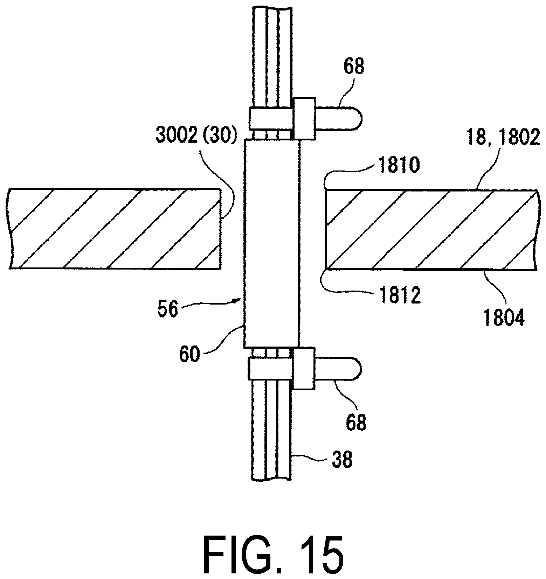

The number of cables 38 is appropriately changed in accordance with the number of sensors provided at the automatic faucet 28. FIGS. 6 and 8 illustrate a case in which two cables 38 are used, and FIGS. 7 and 15 illustrate a case in which three cables 38 are used. As the cable 38 including a plurality of electric wires, any cables 38 having various known configurations can be used.

As illustrated in FIGS. 3, 6, and 7, the cable 38 extends downward from the vicinity of the connecting pipe portion 46A for water supply at the lower surface 4004 of the base plate portion 40 through the notch portion 3002 having an arcuate shape provided at a section closer to one side in the longitudinal direction of one long side of the through-hole 30 of the counter table 18.

The cable protection member 56 according to the present embodiment is disposed in the through-hole 30 and the notch portion 3002 to protect the cable 38 from the edges 1810 and 1812.

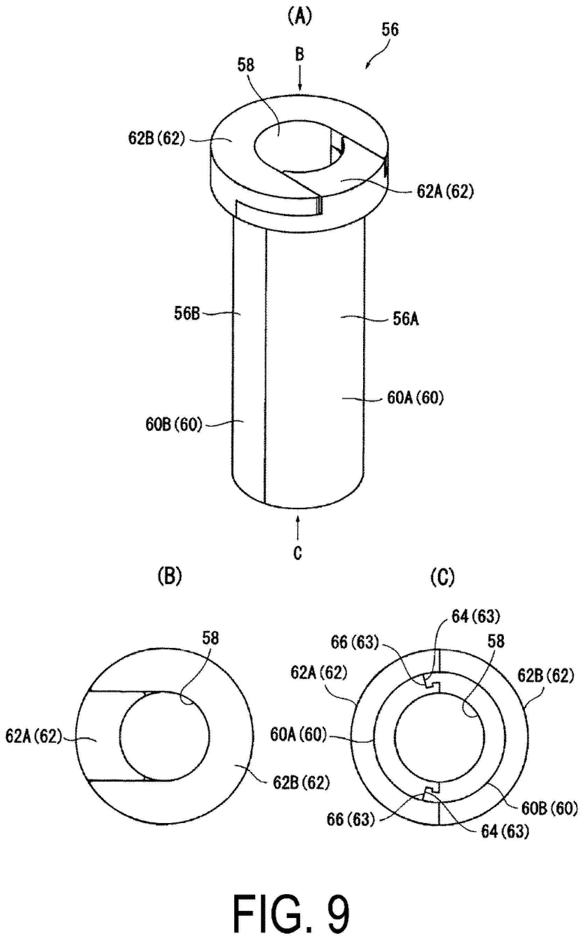

As illustrated in FIGS. 8 and 9, the cable protection member 56 includes the cable insertion hole 58 through which the cable 38 is inserted, and is comprised of a pair of protection member sections 56A and 56B which can be divided into a first protection member section 56A and a second protection member section 56B having an elongated shape in a diameter direction of the cable insertion hole 58.

The pair of protection member sections 56A and 56B includes diameter-direction coupling portions 63 to be immovably coupled in a direction away from each other in the diameter direction of the cable insertion hole 58 and forms therein the cable insertion hole 58 with the pair of protection member sections 56A and 56B coupled via the diameter-direction coupling portions 63.

As illustrated in FIG. 9, in the present embodiment, the cable protection member 56 includes a cylindrical portion 60 that includes the cable insertion hole 58 and has a uniform outer diameter, and a flange portion 62 which is provided at an end portion of the cylindrical portion 60 in the longitudinal direction, which has an outer diameter larger than the outer diameter of the cylindrical portion 60, and through which the cable insertion hole 58 extends.

The pair of protection member sections 56A and 56B respectively include cylindrical half-body portions 60A and 60B that form the cylindrical portion 60 in a state of being coupled via the diameter-direction coupling portions 63, and flange half-body portions 62A and 62B which are provided at end portions of the cylindrical half-body portions 60A and 60B in the longitudinal direction and which form the flange portion 62 in a state of being coupled to each other.

The first protection member section 56A and the second protection member section 56B constituting the cable protection member 56 are made of an insulating synthetic resin.

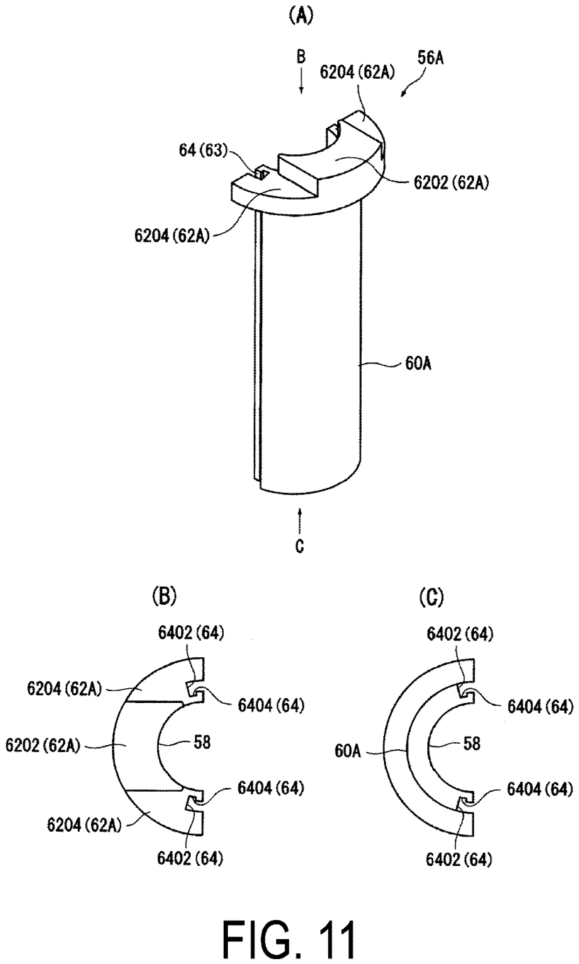

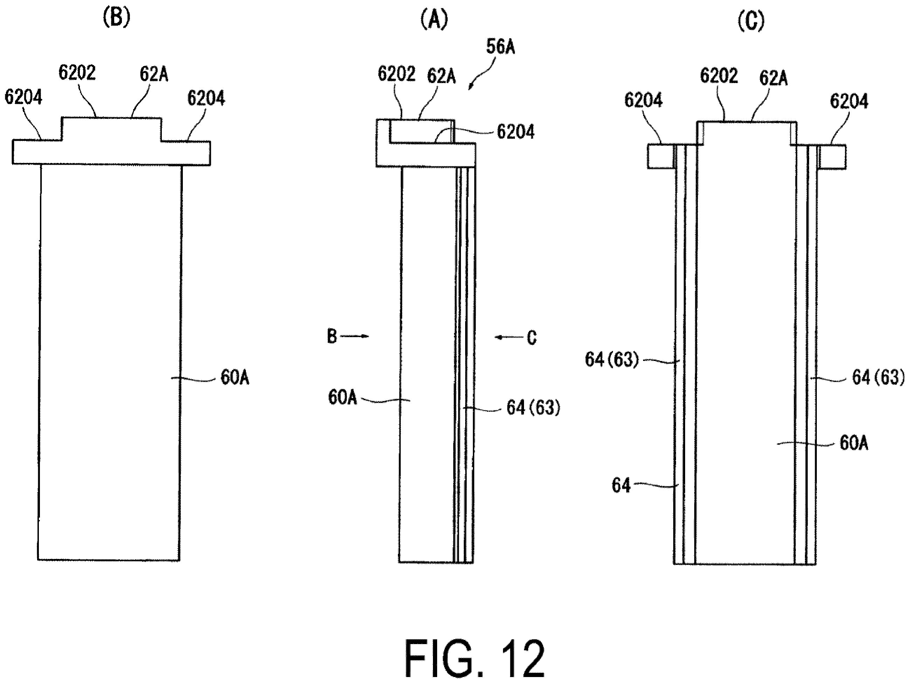

As illustrated in FIGS. 11 and 12, the cylindrical half-body portion 60A of the first protection member section 56A is formed in an elongated shape having a semicircular arc cross-section, and the inner circumferential surface thereof constitutes a half portion of the cable insertion hole 58.

As illustrated in FIG. 9(C), the diameter-direction coupling portion 63 includes a locking groove 64 provided at one of the first protection member section 56A and the second protection member section 56B and a locking projection 66 which is provided at the other of the first protection member section 56A and the second protection member section 56B and can be locked with the locking groove 64.

As illustrated in FIGS. 11 and 12, in the present embodiment, the locking groove 64 is provided on both sides of the cylindrical half-body portion 60A in the circumferential direction and extends over substantially the entire length of the cylindrical half-body portion 60A in the longitudinal direction.

As illustrated in FIGS. 11(B) and 11(C), the locking groove 64 includes a circumferential groove 6402 extending in the circumferential direction of the cylindrical half-body portion 60A and a radial groove 6404 extending from an end portion of the circumferential groove 6402 toward an inner side in the radial direction of the cylindrical half-body portion 60A.

As illustrated in FIG. 11(B), the flange half-body portion 62A of the first protection member section 56A has a semi-annular plate-like shape in a plan view.

The inner circumferential surface of the flange half-body portion 62A is continuous with the inner circumferential surface of the cylindrical half-body portion 60A.

As illustrated in FIGS. 11(A), 11(B) and 12(B), the flange half-body portion 62A includes a central portion 6202 located at the center in the extension direction of the flange half-body portion 62A and a pair of side portions 6204 which is provided on both sides of the central portion 6202 and is thinner than the central portion 6202.

The locking grooves 64 are formed extending from the cylindrical half-body portion 60A to the pair of side portions 6204.

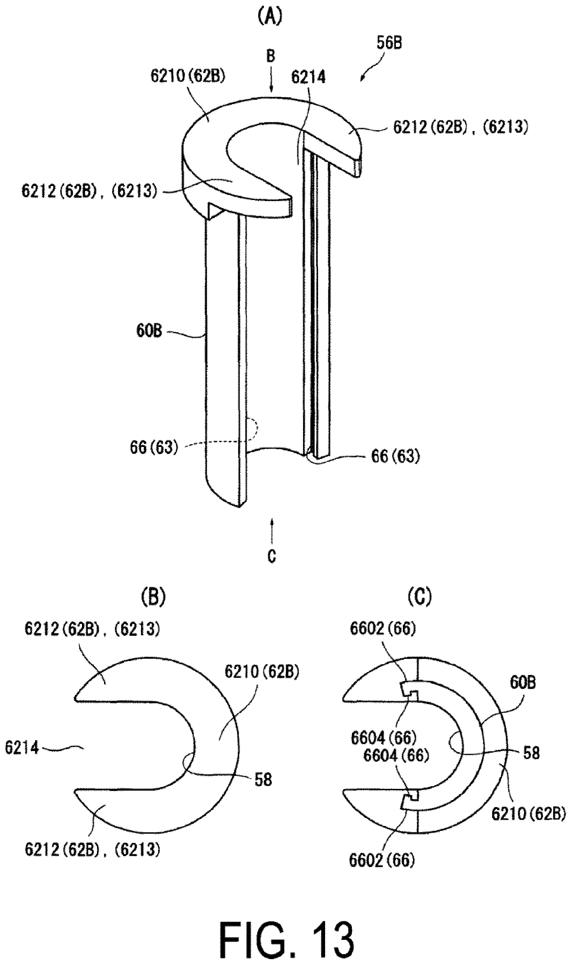

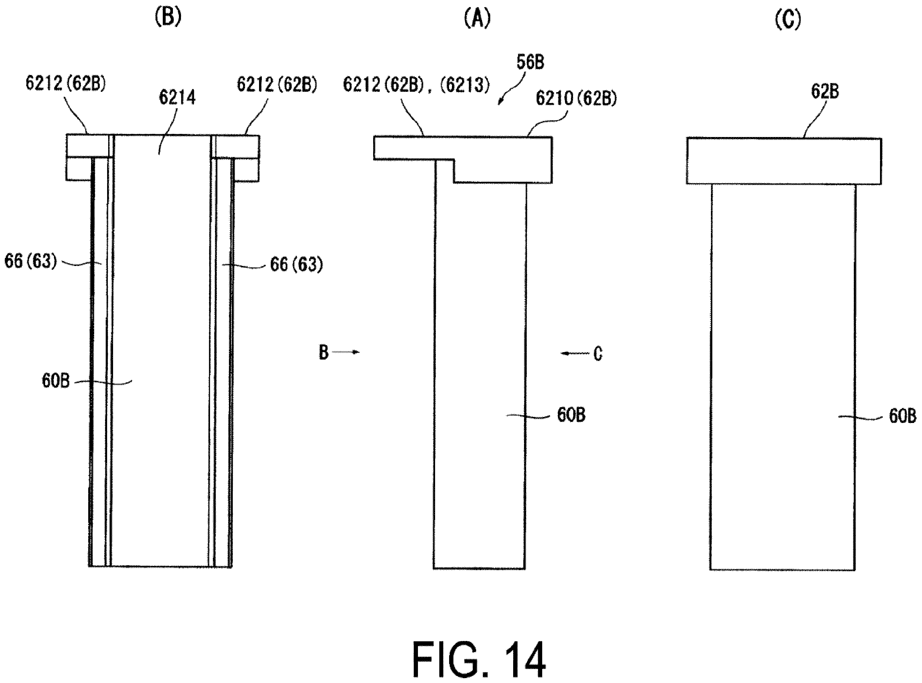

As illustrated in FIGS. 13 and 14, the cylindrical half-body portion 60B of the second protection member section 56B is formed in an elongated shape having a semicircular arc cross-section, and the inner circumferential surface thereof constitutes a half portion of the cable insertion hole 58.

In the present embodiment, the locking projection 66 is provided on both sides of the cylindrical half-body portion 60B in the circumferential direction and extends over substantially the entire length of the cylindrical half-body portion 60B in the longitudinal direction.

As illustrated in FIG. 13(C), the locking projection 66 includes a circumferential projection 6602 that can be locked with the circumferential groove 6402 and a radial projection 6604 that extends from an end portion of the circumferential projection 6602 toward an inner side in the radial direction of the cylindrical half-body portion 60B and can be locked with the radial groove 6404.

As illustrated in FIG. 13(B), the shape of the flange half-body portion 62B of the second protection member section 56B includes a semi-annular plate-like portion 6210 and a pair of projection portions 6212 projecting from both sides of the semi-annular plate-like portion 6210 in the circumferential direction in a plan view, and an open portion 6214 is formed between the pair of projection portions 6212.

The inner circumferential surface of the flange half-body portion 62B is continuous with the inner circumferential surface of the cylindrical half-body portion 60B.

As illustrated in FIG. 14(A), the pair of projection portions 6212 is formed to have a thickness thinner than the thickness of the semi-annular plate-like portion 6210.

As illustrated in FIG. 14(B), the pair of locking projections 66 extends from the cylindrical half-body portion 60B to immediately below the pair of projection portions 6212.

Next, a method of using the cable protection member 56 will be described.

First, the cable 38 pulled out from the faucet 32 placed on the counter table 18 is covered with the cable protection member 56.

More specifically, as illustrated in FIG. 8(A), the first protection member section 56A is positioned with the cable 38 positioned at the inner circumferential surface of the first protection member section 56A covering the half of the cable 38 in the radial direction, an end portion of the cylindrical half-body portion 60B located opposite to the flange half-body portion 62B of the second protection member section 56B is made to face an end portion of the flange half-body portion 62A of the first protection member section 56A, and the first and second protection member sections 56A and 56B are moved in directions approaching each other along the longitudinal direction of the first and second protection member sections 56A and 56B.

By this movement, the locking projections 66 are locked with the locking grooves 64 as illustrated in FIG. 8(B), and the pair of side portions 6204 of the flange half-body portion 62A of the first protection member section 56A comes into contact with the pair of projection portions 6212 of the flange half-body portion 62B of the second protection member section 56B as illustrated in FIG. 8(C).

In this state, the central portion 6202 of the flange half-body portion 62A of the first protection member section 56A is aligned with the open portion 6214 of the flange half-body portion 62B of the second protection member section 56B, the projection portions 6212 of the flange half-body portion 62B of the second protection member section 56B are aligned with the pair of side portions 6204 of the flange half-body portion 62A of the first protection member section 56A, and the cable 38 is covered with the cable protection member 56.

That is, the cable 38 is covered with the cylindrical half-body portions 60A and 60B and the flange half-body portions 62A and 62B of the pair of protection member sections 56A and 56B, whereby a state in which the cable 38 is inserted through the cable insertion hole 58 of the cable protection member 56 is achieved.

In this state, when the first and second protection member sections 56A and 56B are moved in directions away from each other along the longitudinal direction of the first and second protection member sections 56A and 56B to separate the end portion of the flange half-body portion 62A of the first protection member section 56A from the end portion of the cylindrical half-body portion 60B located opposite to the flange half-body portion 62B of the second protection member section 56B, the first and second protection member sections 56A and 56B can be divided in the diameter direction of the cable insertion hole 58.

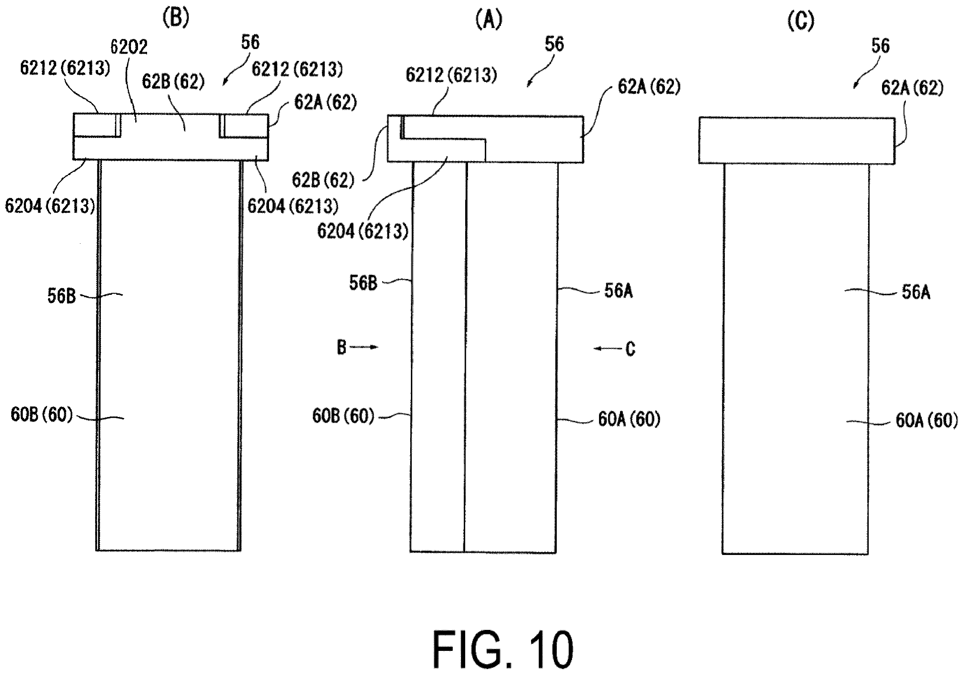

In this state, the upper surface of the first protection member section 56A and the upper surface of the second protection member section 56B are located on the same plane, and the lower surface of the first protection member section 56A and the lower surface of the second protection member section 56B are located on the same plane as illustrated in FIG. 10.

The first protection member section 56A and the second protection member section 56B are immovably coupled to each other in the diameter direction of the cable insertion hole 58 by the locking grooves 64 and the locking projections 66 constituting the diameter-direction coupling portions 63, more specifically, by locking between the circumferential grooves 6402 and the circumferential projections 6602 and locking between the radial grooves 6404 and the radial projections 6604.

As illustrated in FIGS. 8(C), 10(A), and 10(B), the movement of the first protection member section 56A toward the flange half-body portion 62B is restricted by the pair of side portions 6204 of the first protection member section 56A being in contact with the pair of projection portions 6212 of the second protection member section 56B.

Thus, the pair of side portions 6204 and the pair of projection portions 6212 constitute first longitudinal coupling portions 6213 which are immovably coupled to each other in one of both longitudinal directions of the protection member sections 56A and 56B with the pair of protection member sections 56A and 56B coupled to each other.

Next, as illustrated in FIGS. 2 and 3, with the cable 38 inserted through the cable protection member 56, the base plate portion 40 of the faucet 32 is moved downward from above the through-hole 30 of the counter table 18 such that the base plate portion 40 is positioned on the upper surface 1802 of the counter table 18 while the rod 48 and the cable 38 are inserted through the through-hole 30.

At this time, as illustrated in FIG. 6(B), the cylindrical portion 60 of the cable protection member 56 is inserted into the notch portion 3002 of the through-hole 30, the flange portion 62 is positioned on the upper surface 1802 of the counter table 18 around the notch portion 3002, and as illustrated in FIG. 7, the flange portion 62 is pressed against the upper surface 1802 of the counter table 18 by the lower surface 4004 of the base plate portion 40 of the faucet 32.

As illustrated in FIG. 7, in the present embodiment, a recess portion 4010 having a shape matching the outer shape of the flange portion 62 is formed in the lower surface 4004 of the base plate portion 40, and the flange portion 62 is pressed against the upper surface 1802 of the counter table 18 via the packing 50 by the recess portion 4010 with the flange portion 62 accommodated in the recess portion 4010.

With the cable protection member 56 attached to the counter table 18 as described above, the cylindrical portion 60 of the cable protection member 56 extends from the inside of the through-hole 30 to below the lower surface 1804 of the counter table 18,

In this state, as illustrated in FIG. 3, by screwing the nut N onto the male thread 4802 of the rod 48 to tighten the clamp fitting 52 with the nut N, the counter table 18 is sandwiched between the base plate portion 40 and the clamp fitting 52 with interposition of the packing 50, whereby the faucet 32 is attached to the upper surface 1802 of the counter table 18.

As a result, the flange portion 62 is pressed against the upper surface 1802 of the counter table 18 by the faucet 32, whereby the cable protection member 56 is attached to the counter table 18.

According to the present embodiment, the cable protection member 56 includes the cable insertion hole 58 through which the cable 38 is inserted and the pair of protection member sections 56A and 56B which can be divided in the diameter direction of the cable insertion hole 58, and the pair of protection member sections 56A and 56B includes the diameter-direction coupling portions 63 to be immovably coupled in a direction away from each other in the diameter direction of the cable insertion hole 58 and forms therein the cable insertion hole 58 with the pair of protection member sections 56A and 56B coupled via the diameter-direction coupling portions 63.

Thus, even with the connector 54 having an outer diameter larger than the inner diameter of the cable insertion hole 58 attached to an end portion of the cable 38, without detaching the connector 54 from the cable 38, the cable 38 can be inserted through the cable insertion hole 58 and covered with the cable protection member 56 by coupling the pair of protection member sections 56A and 56B with the cable 38 sandwiched therebetween with the diameter-direction coupling portions 63.

This allows the cable 38 to be easily and reliably covered and protected by the cable protection member 56 and is advantageous in improving efficiency of protection work of the cable 38.

In the aircraft lavatory unit 10, even when severe vibration occurs in a fuselage because an aircraft enters an air pocket during flight and the cable 38 is about to come into contact with the edges 1810 and 1812 of the counter table 18 due to this vibration, the portion of the cable 38 near the edges 1810 and 1812 is covered with the cylindrical portion 60 of the cable protection member 56, and thus damage to the cable 38 is prevented, which is advantageous in simplifying maintenance work.

In the present embodiment, the cable protection member 56 includes the cylindrical portion 60 having a uniform outer diameter and including the cable insertion hole 58, and the pair of protection member sections 56A and 56B includes the cylindrical half-body portions 60A and 60B which include the diameter-direction coupling portions 63 and form the cylindrical portion 60 in a state of being coupled to each other.

Thus, even when the cable 38 is inserted into the through-hole 30 of a wall portion including the counter table 18, the cable 38 can be disposed in the through-hole 30 with the cable 38 inserted through the cylindrical portion 60, which is advantageous in protecting the cable 38 from the edges 1810 and 1812 of the wall portion.

Since the diameter-direction coupling portions 63 extend over substantially the entire length of the cylindrical portion 60, the diameter-direction coupling portions 63 are unlikely to come off in the diameter direction of the cable insertion hole 58, which is advantageous in reliably covering and protecting the cable 38.

In this case, the flange portion 62 may be omitted and, for example, bundling bands 68 may be used as a movement blocking member that blocks the movement of the cable protection member 56 along the cable 38 as illustrated in FIG. 15.

That is, the bundling band 68 may be fastened to portions of the cable 38 projecting from both ends of the cylindrical portion 60 in the longitudinal direction to prevent the cylindrical portion 60 (the cable protection member 56) from moving along the longitudinal direction of the cable 38.

In the present embodiment, a case in which the cable insertion hole 58 is formed to have an inner diameter larger than the outer diameter of the cable 38 has been described. However, the cable insertion hole 58 may be formed to have an inner diameter that can prevent the movement of the cable 38. When the cable protection member 56 is attached to the cable 38 in this manner, it is advantageous in omitting a movement prevention member such as the bundling bands 68.

In the present embodiment, the diameter-direction coupling portion 63 includes the locking groove 64 provided at the cylindrical half-body portion 60A of one of the pair of protection member sections 56A and 56B and the locking projection 66 which is provided at the cylindrical half-body portion 60B of the other protection member section 56B of the pair of protection member sections 56A and 56B and can be locked with the locking groove 64, which is advantageous in easily forming the diameter-direction coupling portion 63.

In the present embodiment, the locking groove 64 includes the circumferential groove 6402 extending in the circumferential direction of the cylindrical half-body portion 60A and the radial groove 6404 extending from the end portion of the circumferential groove 6402 toward the inner side in the radial direction of the cylindrical half-body portion 60A, and the locking projection 66 includes the circumferential projection 6602 that can be locked with the circumferential groove 6402 and the radial projection 6604 that can be locked with the radial groove 6404. Thus, it is advantageous in reliably and immovably coupling the protection member sections 56A and 56B in the diameter direction of the cable insertion hole 58 with the cable protection member 56 attached to the cable 38.

In the present embodiment, the cable protection member 56 includes the flange portion 62 which is provided at the end portion of the cylindrical portion 60 in the longitudinal direction and has an outer diameter larger than the outer diameter of the cylindrical portion 60 and through which the cable insertion hole 58 extends, and the pair of protection member sections 56A and 56B includes the flange half-body portions 62A and 62B which are provided at the end portions of the cylindrical half-body portions 60A and 60B in the longitudinal direction and form the flange portion 62 in a state of being coupled to each other.

The flange portion 62 may be omitted, but in the case of providing the flange portion 62, attaching the flange portion 62 to an upper surface of a wall portion such as the counter table 18 is advantageous in easily disposing the cable protection member 56.

In the present embodiment, the flange half-body portions 62A and 62B of the pair of protection member sections 56A and 56B are provided with the first longitudinal coupling portions 6213 which are immovably coupled to each other in one direction of both directions of the longitudinal direction of the protection member sections 56A and 56B with the pair of protection member sections 56A and 56B coupled to each other.

Thus, in covering the cable 38 with the cable protection member 56, it is possible to prevent the pair of protection member sections 56A and 56B from moving along one of both directions in the longitudinal direction of the protection member sections 56A and 56B, which is advantageous in easily assembling the pair of protection member sections 56A and 56B.

### Modified Example 1

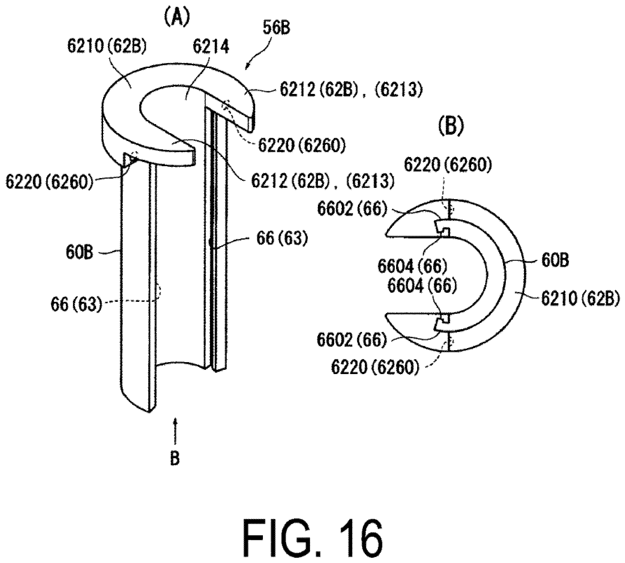

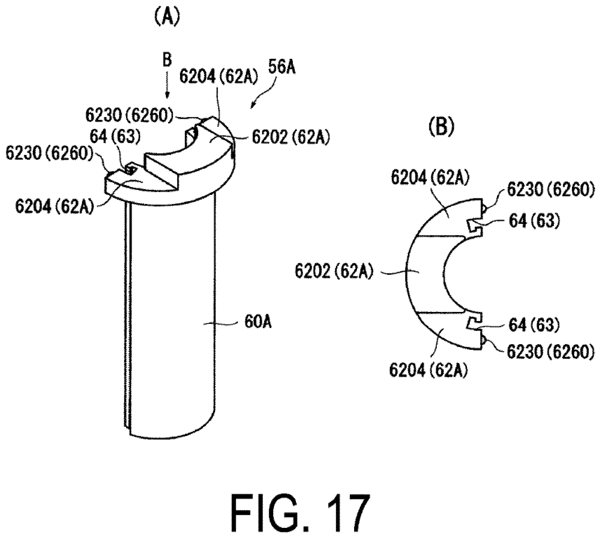

Next, Modified Example 1 of the present embodiment will be described with reference to FIGS. 16 and 17.

In the following description of modified examples, the same sections and members as those in the first embodiment will be denoted by the same reference signs, descriptions thereof will be omitted, and different sections will be mainly described.

In Modified Example 1, the pair of protection member sections 56A and 56B includes second longitudinal coupling portions 6260 which are immovably coupled to each other in both directions of the longitudinal direction of the protection member sections 56A and 56B in a state of being coupled to each other, and the second longitudinal coupling portions 6260 are provided at the flange half-body portions 62A and 62B.

That is, locking recess portions 6220 are provided on end surfaces of both ends of the semi-annular plate-like portion 6210 of the flange half-body portion 62B of the second protection member section 56B as illustrated in FIG. 16, locking projections 6230 which can be locked with the locking recess portions 6220 are provided at end surfaces of the pair of side portions 6204 of the flange half-body portion 62A of the first protection member section 56A as illustrated in FIG. 17, and the locking recess portions 6220 and the locking projections 6230 constitute the second longitudinal coupling portions 6260.

Accordingly, the first protection member section 56A is positioned with the cable 38 positioned at the inner circumferential surface of the first protection member section 56A so as to cover the half of the cable 38 in the radial direction, an end portion of the cylindrical half-body portion 60B located opposite to the flange half-body portion 62B of the second protection member section 56B is made to face an end portion of the flange half-body portion 62A of the first protection member section 56A, the first and second protection member sections 56A and 56B are moved in directions approaching each other along the longitudinal direction of the first and second protection member sections 56A and 56B, whereby the central portion 6202 of the flange half-body portion 62A of the first protection member section 56A is aligned with the open portion 6214 of the flange half-body portion 62B of the second protection member section 56B.

Then, the projection portions 6212 of the flange half-body portion 62B of the second protection member section 56B are aligned with the pair of side portions 6204 of the flange half-body portion 62A of the first protection member section 56A, and at the same time, the locking projections 6230 are locked with the locking recess portions 6220, whereby the first protection member section 56A and the second protection member section 56B are coupled to each other.

This allows the pair of protection member sections 56A and 56B to be immovably coupled to each other in both directions of the longitudinal direction of the protection member sections 56A and 56B with the cable 38 covered with the cable protection member 56.

Thus, in covering the cable 38 with the cable protection member 56, it is possible to prevent the pair of protection member sections 56A and 56B from moving along the longitudinal direction of the protection member sections 56A and 56B, which is advantageous in easily assembling the pair of protection member sections 56A and 56B.

### Modified Example 2

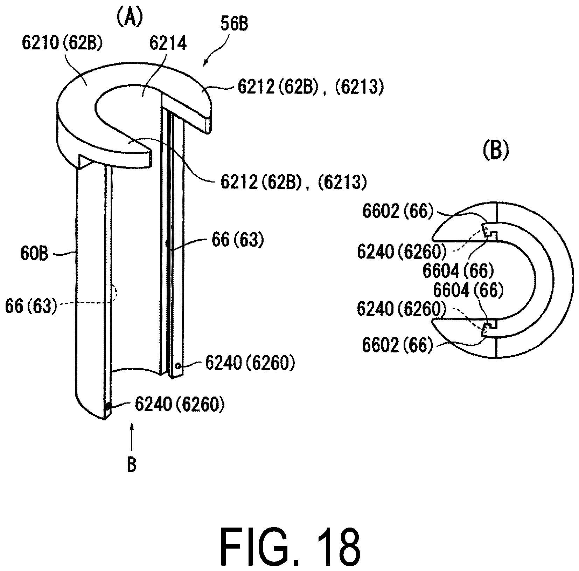

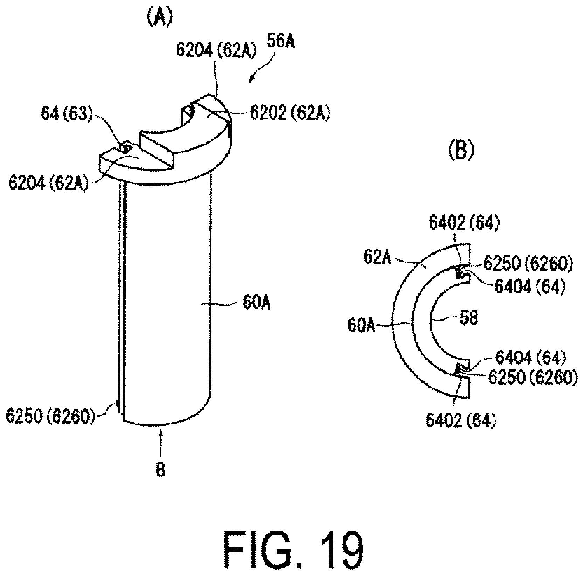

Next, Modified Example 2 of the present embodiment will be described with reference to FIGS. 18 and 19.

In Modified Example 2, the pair of protection member sections 56A and 56B includes the second longitudinal coupling portions 6260 which are immovably coupled to each other in both directions of the longitudinal direction of the protection member sections 56A and 56B in a state of being coupled to each other, and the second longitudinal coupling portions 6260 are provided at the cylindrical half-body portions 60A and 60B.

That is, as illustrated in FIG. 18, locking recess portions 6240 are provided at places on end surfaces of the locking projections 66 (the circumferential projections 6602) on both sides in the circumferential direction of the cylindrical half-body portion 60B of the second protection member section 56B, the places being located an opposite side of the flange half-body portion 62B. As illustrated in FIG. 19, locking projections 6250 which can be locked with the locking recess portions 6240 are provided at sections on bottom surfaces of the locking grooves 64 (the circumferential grooves 6402) on both sides in the circumferential direction of the cylindrical half-body portion 60A of the first protection member section 56A, the places being located on an opposite side of the flange half-body portion 62A. The locking recess portions 6240 and the locking projections 6250 constitute the second longitudinal coupling portions 6260.

Accordingly, the first protection member section 56A is positioned with the cable 38 positioned at the inner circumferential surface of the first protection member section 56A so as to cover the half of the cable 38 in the radial direction, an end portion of the cylindrical half-body portion 60B located opposite to the flange half-body portion 62B of the second protection member section 56B is made to face an end portion of the flange half-body portion 62A of the first protection member section 56A, the first and second protection member sections 56A and 56B are moved in directions approaching each other, whereby the central portion 6202 of the flange half-body portion 62A of the first protection member section 56A is aligned with the open portion 6214 of the flange half-body portion 62B of the second protection member section 56B.

Then, the projection portions 6212 of the flange half-body portion 62B of the second protection member section 56B are aligned with the pair of side portions 6204 of the flange half-body portion 62A of the first protection member section 56A, and at the same time, the locking projections 6250 are locked with the locking recess portions 6240, whereby the first protection member section 56A and the second protection member section 56B are completely coupled to each other.

This allows the pair of protection member sections 56A and 56B to be immovably coupled to each other in both directions of the longitudinal direction of the protection member sections 56A and 56B with the cable 38 covered with the cable protection member 56.

Thus, in covering the cable 38 with the cable protection member 56, it is possible to prevent the pair of protection member sections 56A and 56B from moving along the longitudinal direction of the protection member sections 56A and 56B, which is advantageous in easily assembling the pair of protection member sections 56A and 56B.

The second longitudinal coupling portions 6260 of Modified Example 2 can be also applied to the cable protection member 56 from which the flange portion 62 is omitted.

### Reference Signs List

10 Aircraft lavatory unit
12 Structural frame
1202 Bottom wall
1204 Front wall
1206 Rear wall
1208 Side wall
1210 Entrance
1212 Inner wall
14 Lavatory
16 Toilet bowl
18 Counter table
1802 Upper surface
1804 Lower surface
1810, 1812 Edge
22 Lower storage portion
2202, 2204 Door
2206 Trash feeding port
24 Upper storage portion
2402 Door
26 Bowl portion
28 Automatic faucet
30 Through-hole
3002 Notch portion
32 Faucet
34 Contact sensor
36 Non-contact sensor
38 Cable
40 Base plate portion
4002 Opening
4004 Lower surface
4010 Recess portion
42 Faucet body
4202 Vertical portion
4204 Horizontal portion
4204A Front surface
4204B Lower surface
44 Water discharge port
46A Connecting pipe portion for water supply
46B Connecting pipe portion for hot water
48 Rod
4802 Male thread
50 Packing
52 Clamp fitting
54 Connector
56 Cable protection member
56A First protection member section
56B Second protection member section
58 Cable insertion hole
60 Cylindrical portion
60A, 60B Cylindrical half-body portion
62 Flange portion
62A, 62B Flange half-body portion
6202 Central portion
6204 Pair of side portions
6210 Semi-annular plate-like portion
6212 Pair of projection portions
6213 First longitudinal coupling portion
6214 Open portion
6220 Locking recess portion
6230 Locking projection
6240 Locking recess portion
6250 Locking projection
6260 Second longitudinal coupling portion
63 Diameter-direction coupling portion
64 Locking groove
6402 Circumferential groove
6404 Radial groove
66 Locking projection
6602 Circumferential projection
6604 Radial projection
68 Bundling band
N Nut

## Claims

1. A cable protection member for protecting a cable, the cable protection member comprising:
a cable insertion hole through which the cable is inserted; and
a pair of protection member sections divisible in a diameter direction of the cable insertion hole;
the pair of protection member sections comprising diameter-direction coupling portions to be immovably coupled in a direction away from each other in the diameter direction of the cable insertion hole, and
the cable insertion hole being formed inside the pair of protection member sections that are being coupled via the diameter-direction coupling portions.

2. The cable protection member according to claim 1, comprising a cylindrical portion comprising the cable insertion hole, wherein
the pair of protection member sections each comprise a cylindrical half-body portion that is formed in an elongated shape having a semicircular arc cross-section and constitutes the cylindrical portion with the pair of protection member sections coupled to each other, and
the diameter-direction coupling portions extend along a longitudinal direction of the cylindrical half-body portion on both sides of the cylindrical half-body portion in a circumferential direction.

3. The cable protection member according to claim 2, wherein
the diameter-direction coupling portions comprise a locking groove provided at one cylindrical half-body portion of the pair of protection member sections and a locking projection which is provided at the cylindrical half-body portion of the other protection section of the pair of protection member sections and can be locked with the locking groove.

4. The cable protection member according to claim 3, wherein
the locking groove comprises a circumferential groove extending in the circumferential direction of the cylindrical half-body portion and a radial groove extending from an end portion of the circumferential groove to an inner side in a radial direction of the cylindrical half-body portion, and
the locking projection comprises a circumferential projection which can be locked with the circumferential groove and a radial projection which can be locked with the radial groove.

5. The cable protection member according to any one of claims 2 to 4, comprising a flange portion provided at an end portion of the cylindrical portion in a longitudinal direction and having an outer diameter larger than an outer diameter of the cylindrical portion, the cable insertion hole extending through the flange, wherein
the pair of protection member sections each comprise a flange half-body portion which is provided at an end portion of the cylindrical half-body portion in the longitudinal direction, have an inner circumferential surface continuous with an inner circumferential surface of the cylindrical half-body portion, and constitute the flange portion with the pair of protection member sections coupled to each other.

6. The cable protection member according to claim 5, wherein the flange half-body portion of the pair of protection member sections is provided with a first longitudinal coupling portion to be immovably coupled to each other in one direction of both directions of a longitudinal direction of the protection member sections that are being coupled to each other.

7. The cable protection member according to claim 1, wherein the pair of protection member sections each comprise a second longitudinal coupling portion to be immovably coupled to each other in both directions of a longitudinal direction of the protection member sections that are being coupled to each other.

8. An aircraft lavatory unit equipped with a cable protection member, the aircraft lavatory unit comprising
a protection member configured to protect from the edge a cable disposed passing near an edge of a wall portion of a lavatory of the aircraft lavatory unit,
the cable protection member comprising:
a cable insertion hole through which the cable is inserted; and
a pair of protection member sections divisible in a diameter direction of the cable insertion hole;
the pair of protection member sections comprising diameter-direction coupling portions to be immovably coupled in a direction away from each other in the diameter direction of the cable insertion hole,
the cable insertion hole being formed inside the pair of protection member sections that are being coupled via the diameter-direction coupling portions, and
the cable protection member covering a portion of the cable passing near the edge with the cable inserted through the cable insertion hole.

9. The aircraft lavatory unit equipped with a cable protection member according to claim 8, wherein
the wall portion is a counter table with a faucet incorporating a sensor configured to detect part of a human body and a bowl portion provided on an upper surface of the counter table,
the faucet is attached to the upper surface of the counter table via a through-hole extending through the counter table,
the cable is connected to the sensor and extends below the counter table through the through-hole,
a section around a lower end of the through-hole at a lower surface of the counter table is the edge,
the cable protection member comprises a cylindrical portion provided with the cable insertion hole,
the pair of protection member sections each comprises a cylindrical half-body portion which is formed in an elongated shape having a semicircular arc cross-section and constitutes the cylindrical portion with the pair of protection member sections coupled to each other,
the diameter-direction coupling portions extend along a longitudinal direction of the cylindrical half-body portion on both sides of the cylindrical half-body portion in a circumferential direction,
the portion of the cable ranges from a section of the cable located in the through-hole to a section of the cable located below the lower surface of the counter table, and
the cylindrical portion covers the portion of the cable with the portion of the cable inserted through the cable insertion hole and extends from inside of the through-hole to below the lower surface of the counter table.

10. The aircraft lavatory unit equipped with a cable protection member according to claim 9, wherein
the cable protection member comprises a flange portion provided at an end portion of the cylindrical portion in a longitudinal direction and having an outer diameter larger than an outer diameter of the cylindrical portion, the cable insertion hole extending through the flange,
the pair of protection member sections each comprises a flange half-body portion which is provided at an end portion of the cylindrical half-body portion in the longitudinal direction, have an inner circumferential surface continuous with an inner circumferential surface of the cylindrical half-body portion, and constitute the flange portion with the pair of protection member sections coupled to each other,
the flange portion is disposed on the upper surface of the counter table with the cable inserted through the cable insertion hole, and
the cable protection member is disposed with the flange portion pressed by the faucet against the upper surface of the counter table around the through-hole.
